# EUROPÄISCHE PATENTSCHRIFT

(11) **EP 0 983 162 B1**
(45) Veröffentlichungstag und Bekanntmachung des Hinweises auf die Patenterteilung: **13.03.2002**
(21) Anmeldenummer: 98934764.6
(22) Anmeldetag: 20.05.1998
(51) Int. Cl.: B60N 2/26, B60N 2/00, B60N 2/44, B60R 21/00

(54) **MATTE MIT EINEM HEIZBAREN DRAHT FÜR EINE KRAFTFAHRZEUGSITZHEIZUNG SOWIE KRAFTFAHRZEUGSITZ MIT EINER SOLCHEN MATTE**
MATTING WITH A HEATABLE WIRE FOR A CAR SEAT HEATING SYSTEM AND CAR SEAT HAVING SUCH A MATTING
MAT COMPORTANT DES FILS CHAUFFANTS POUR LE CHAUFFAGE D'UN SIEGE DE VEHICULE A MOTEUR, ET SIEGE DE VEHICULE A MOTEUR POURVU D'UN TEL MAT

(30) Priorität: 21.05.1997 DE 29708959 U
(43) Veröffentlichungstag der Anmeldung: 08.03.2000
(73) Patentinhaber: SIEMENS AKTIENGESELLSCHAFT, 80333 München (DE)
(72) Erfinder: BAUMGARTNER, Joachim, D-93173 Wenzenbach (DE); POPP, Peter, D-93049 Regensburg (DE); HEITZER, Günter, D-93102 Pfatter (DE)
(86) Internationale Anmeldenummer: DE9801395
(87) Internationale Veröffentlichungsnummer: WO9852786

(56) Entgegenhaltungen:
- EP-A- 0 728 636
- DE-A- 4 228 624
- DE-A- 4 338 285
- DE-A- 4 401 819
- DE-A- 4 409 971
- DE-A- 19 518 410
- DE-U- 29 619 668
- US-A- 5 618 056
- "COMBINED TAG ANTENNA FOR REARWARD FACING INFANT SEAT AND OCCUPANT DETECTION SENSOR" RESEARCH DISCLOSURE, Nr. 382, 1. Februar 1996, Seiten 121/122-122, XP000553623
- PATENT ABSTRACTS OF JAPAN vol. 095, no. 009, 31. Oktober 1995 & JP 07 164943 A (KOITO IND LTD), 27. Juni 1995

## Beschreibung

Die Erfindung betrifft eine Matte mit einem heizbaren Draht für eine Kraftfahrzeugsitzheizung gemäß dem Oberbegriff des Patentanspruchs 1 sowie einen Kraftfahrzeugsitz mit einer solchen Matte.

Zum Beheizen von Kraftfahrsitzen sind in den Kraftfahrzeugsitz einbringbare Matten bekannt, die heizbare Drähte zum Erwärmen des Kraftfahrzeugsitzes bei verbauter Matte aufweisen.

Andererseits sind Airbags in einem Kraftfahrzeug als Insassenschutzmittel hinreichend bekannt.

Kinder in einem auf dem Beifahrersitz angeordneten Kindersitz sind jedoch durch das Ausblasen der beifahrerseitigen Airbags gefährdet, insbesondere, wenn die Rückenlehne des Kindersitzes dem Armaturenbrett zugewandt ist. Abhilfe schaffen Vorrichtungen zum Erkennen eines auf dem Beifahrersitz abgestellten Kindersitzes. Ein solcher Kindersitz kann insbesondere folgendermaßen berührungslos erkannt werden: Eine im Fahrzeug vorgesehene Sendeantenne gibt ein elektromagnetisches Signal ab. Ein auf dem Beifahrersitz abgestellter Kindersitz enthält einen Resonator/Transponder, der das von der Sendeantenne ausgegebene Signal empfängt, in charakteristischer Weise verändert und das modifizierte Signal abgibt. Eine im Fahrzeug vorgesehene Empfangsantenne nimmt das von dem Resonator übermittelte Signal auf. Weist das empfangene Signal eine Signalstruktur auf, die auf das Vorhandensein eines Resonators und damit eines Kindersitzes im Umfeld des Beifahrersitzes schließen läßt, so wird im folgenden ein Auslösen des/der zugeordneten Gassack-Schutzmittel verhindert.

Aus der DE 44 09 971 A1 ist bekannt, eine Kunststoffolie mit eingebrachten Widerstandelementen zur Gewichtserkennung mit einer Antenne für die Kindersitzerkennung zu versehen.

Nachteilig an der bekannten Antennenanordnung ist, daß in jedem Fall ein aufwendiger Folienträger inklusive Gewichtssensor zur Anbringung der Antennen hergestellt und in den Kraftfahrsitz eingebracht werden muß.

Die genannte Antenne ist zwar an sich aus US-A-5,618,056 bekannt, jedoch nicht in Kombination mit der Sitzheizung. Auch das Dokument DE-A-43 38 285, in welchem das Heizelement zugleich als Sensor für eine Sitzbelegungserkennung dient, führt von der vorlegenden Erfindung weg, da nach dieser Sitzheizungsdrähte und Antenne voneinander unabhängig sein sollen.

Aufgabe der Erfindung ist es deshalb, eine andere, hinsichtlich des Fertigungsaufwandes vorteilhafte Art der Anbringung der Antenne für die Kindersitzerkennung zu schaffen.

Die Aufgabe wird gelöst durch die Merkmale des Patentanspruchs 1. Die Antenne ist dabei in eine einen Sitzheizungsdraht tragende Matte integriert und separat von dem Sitzheitzungsdraht ausgebildet.

Aufgrund der steigenden Anzahl mit Sitzheizung ausgestatteter Kraftfahrzeuge kann die Antenne des Kindersitzerkennungssystems ohne weiteren Aufwand mit in die einen Sitzheizungsdraht tragende Matte aufgenommen werden. Eine zusätzliche Matte für die Antennen im Kraftfahrsitz ist nicht erforderlich. Die Antenne kann dabei in einem gemeinsamen Arbeitsgang zusammen mit dem Sitzheizungsdraht in die Matte eingezogen werden. Ein Kraftfahrzeugsitz mit der erfindungsgemäßen Matte wird als Lösung der den Kraftfahrzeugsitz betreffenden Anteil der Erfindungsaufgabe durch die Merkmale des Anspruchs 5 beansprucht.

Vorteilhafte Weiterbildungen sind durch die abhängigen Unteransprüche gekennzeichnet.

Die Erfindung und ihre Weiterbildungen werden anhand der Zeichnungen näher erläutert. Es zeigen:
- Figur 1: einen Kraftfahrzeugsitz in perspektivischer Ansicht mit zwei aufgebrochener. Bereichen,
- Figur 2: eine erfindungsgemäße Matte in Draufsicht, und
- Figur 3: einen Kraftfahrzeugsitz im Querschnitt.

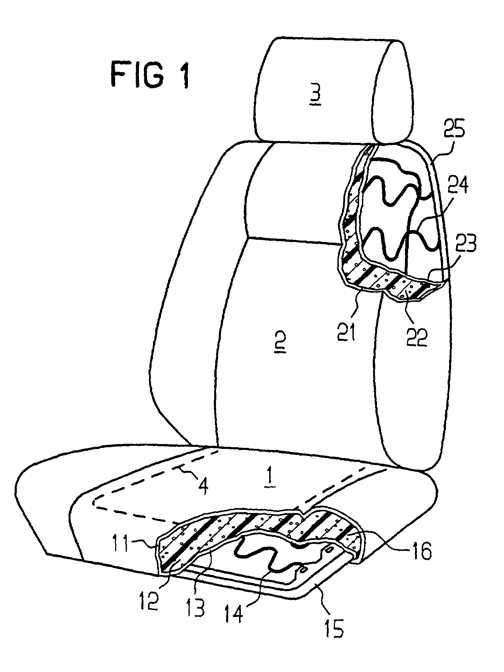

Der in der Figur 1 gezeigte Kraftfahrzeugsitz weist ein Sitzteil 1, eine Lehne 2 und eine Kopfstütze 3 auf. Sitzteil 1 und Lehne 2 weisen strukturell in etwa den gleichen Aufbau auf. Das Sitzteil 1 weist einen Sitzrahmen 15 auf. Am Sitzrahmen 15 sind Sitzfedern 14 angeordnet, die ein Sitzpolster 12 federnd lagern. Zwischen Sitzpolster 12 und Sitzfedern 14 ist eine Sitzpolsterauflage 13 zum Anbringen des Sitzpolsters 12 vorgesehen. Das Sitzpolster 12 ist mit einem Sitzpolsterüberzug 11 überzogen. Strichiert eingezeichnet ist eine erfindungsgemäße Matte 4, die nicht eingezeichnete Sitzheizungsdrähte und eine oder mehrere Antennen zur Kindersitzerkennung aufweist, und die zwischen Sitzpolster 12 und Sitzpolsterüberzug 11 angeordnet ist.

Die erfindungsgemäße Art der Antennenanordnung ist unabhängig von der sonstigen Sitzgestaltung. Die Matte 4 weist einen geringen Abstand zu einem aus dem Kraftfahrzeugsitz abgestellten Kindersitz mit Resonator auf, so daß eine äußerst starke Signalkopplung zwischen Antenne und Resonator vorliegt - vorzugsweise zwischen Sendeantenne und Resonator aber auch zwischen Resonator und Empfangsantenne, wenn sowohl Sende- als auch Empfangsamenne/n in der Matte 4 im Kraftfahrzeugsitz angeordnet sind.

Die Lehne 2 weist in etwa den gleichen strukturellen Aufbau auf wie das Sitzteil 1: Es ist ein ein Lehnenrahmen 25 vorgesehen, eine Lehnenfeder 24, eine Lehnenpolsterauflage 23, ein Lehnenpolster 22 und ein Lehnenpolsterüberzug 21.

Erfindungsgemäß kann die Matte 4 nicht nur auf die vorgeschlagenen Arten in einem Sitzteil des Kraftfahrzeugsitzes angeordnet werden, sondern insbesondere auch in der Lehne des Kraftfahrzeugsitzes.

Vorzugsweise umfaßt eine im Kraftfahrzeugsitz angeordnete Sendeantenne nahezu die gesamte zur Verfügung stehende Fläche des Sitzteils bzw der Lehne. Vorzugsweise sind ferner zwei weitere Empfangsantennen im Kraftfahrzeugsitz angeordnet, wobei diese Empfangsantennen die Fläche des Sitzteils oder der Lehne innerhalb der von der Sendeantenne umfaßten Fläche zu etwa gleichen Teile umfassen. Insbesondere bei einer Umfassung der linksseitigen Hälfte des Sitzteils bzw der Lehne durch die eine Empfangsantenne und der Umfassung der rechtsseitigen Hälfte des Sitzteils bzw der Lehne durch die weitere Empfangsantenne kann ein mit zwei Resonatoren versehener Kindersitz nicht nur erkannt werden: Auch seine Ausrichtung bezüglich des Kraftfahrzeugsitzes ist damit ableitbar. Vorzugsweise ist der Sitz mit der Antenne der Beifahrersitz.

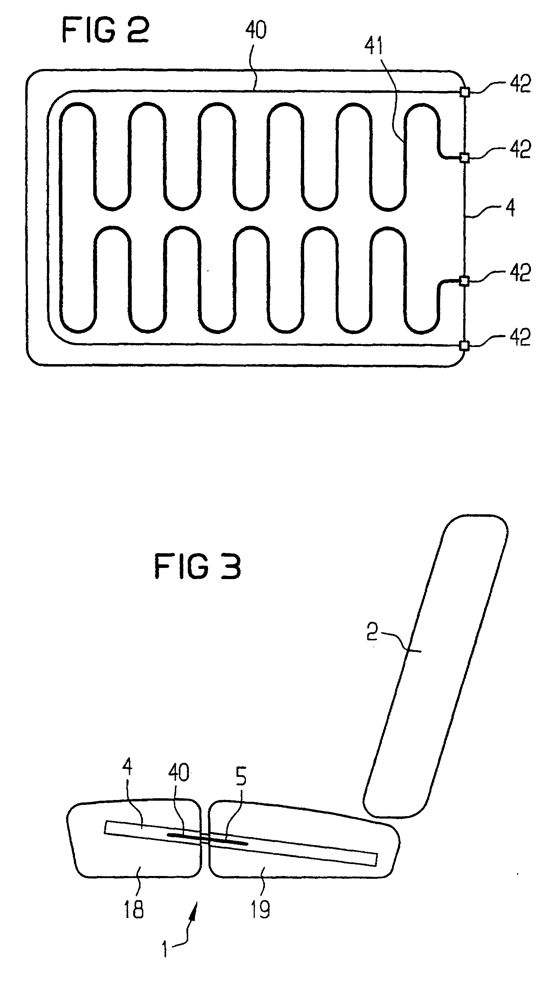

Figur 2 zeigt die erfindungsgemäße Matte 4 in Draufsicht. Dabei ist der heizbare Draht 41 für die Sitzheizung deutlich erkennbar, wie auch eine einzige Antennenschleife 40, in diesem Falle zum Aussenden von elektromagnetischen Signalen für eine nach dem Kraftfahrzeugsitz abgestellten Kindersitz. Für alle Anschlüsse der Matte sind Kontaktvorrichtungen 42 vorgesehen. Es versteht sich, daß auch mehrere Sitzheizungsdrahtzüge und Antennenleiterzüge in einer solchen Matte angeordnet sein können. Die einzelnen heizbaren Drähte und Antennen können sich auch kreuzen, sofern sie in unterschiedlichen Schichten der Matte angeordnet und damit elektrisch voneinander isoliert sind.

Figur 3 zeigt den Querschnitt eines Kraftfahrzeugsitzes mit einem Sitzteil 1 und einer Lehne 2, wobei das Sitzteil 1 die beiden Komponenten Schenkelablage 18 und Basisteil 19 aufweist. Insbesondere bei Sportsitzen ist die Schenkelablage 18 beweglich zum fest angeordneten Basisteil 19 gelagert und nach vorne ausziehbar, um den Fahrzeugsitz an die Körpergröße des Insassen anzupassen. Bei einem derart ausgestalteten Kraftfahrzeugsitz kann die Antennenfläche einer lediglich im Basisteil angeordneten Antenne nicht ausreichend groß für die Kopplung zu einem abgestellten Kindersitz sein. Es ist also dafür zu sorgen, daß auch die Schenkelablage 18 mit einer Antenne durchsetzt ist. Deshalb weist das Basisteil 19 einen Antennenleiterzug für die Kindersitzerkennung auf, der beispielsweise in eine Sensorfolie integriert ist, die darüber hinaus Widerstandelemente zur Gewichtserkennung eines auf dem Kraftfahrzeugsitz sitzenden Insassen enthält. Die Antennenanordnung dem Basisteil 19 des Kraftfahrzeugsitzes kann aber auch in jeder anderen Art ausgebildet sein. In der Schenkelablage 18 ist nun die erfindungsgemäße Matte 4 angeordnet, wobei die Matte 4 über ihre Kontaktvorrichtungen 42 und einem Kabel, das in nicht ausgezogenem Zustand der Schenkelablage 18 ausreichend Spiel aufweist, über eine basisteilseitige Kontaktvorrichtung mit der Antenne 5 des Basisteils 19 verbunden, so daß sich durch den Antennenzug 40 in der Sitzheizungsmatte 4 der Schenkelablage 18 die wirksame Antennenfläche für das Absenden oder Aufnehmen von elektromagnetischer Strahlung vergrößert.

## Patentansprüche

1. Matte zum Einbau in oder an einen Kraftfahrzeugsitz, mit einem heizbaren Draht (41) für eine Kraftfahrzeugsitzheizung, **dadurch gekennzeichnet, daß** die Matte (4) zusätzlich zumindest eine Antenne (40) zum Aussenden oder Empfangen von elektromagnetischen Signalen aufweist.

2. Matte nach Anspruch 1, **dadurch gekennzeichnet, daß** die Antenne zum Zusammenwirken mit einem Resonator oder Transponder eines Kindersitzes für ein Kraftfahrzeug vorgesehen ist.

3. Matte nach Anspruch 1 oder Anspruch 2, **dadurch gekennzeichnet, daß** an der Matte (4) eine Kontaktvorrichtung (42) vorgesehen ist zum mittelbaren oder unmittelbaren Anschluß der Antenne (40) an ein elektrisches Steuergerät.

4. Matte nach einem der Ansprüche 1 bis 3, **dadurch gekennzeichnet, daß** die Matte (4) aus einem Textilstoff hergestellt ist.

5. Kraftfahrzeugsitz mit einer Matte nach einem der vorhergehenden Ansprüche.

6. Kraftfahrzeugsitz nach Anspruch 5, bei dem die Matte (4) in einem Sitzteil (1) des Kraftfahrzeugsitzes angeordnet ist.

7. Kraftfahrzeugsitz nach Anspruch 5 oder Anspruch 6, bei dem die Matte (4) zwischen einem Polster (12,22) und einem Polsterbezug (11,21) des Kraftfahrzeugsitzes angeordnet ist.

8. Kraftfahrzeugsitz nach Anspruch 5 oder Anspruch 6, bei dem die Matte (4) zwischen einer Polsterauflage (13,23) und einem Polster (12,22) des Kraftfahrzeugsitzes angeordnet ist.

9. Kraftfahrzeugsitz nach einem der Ansprüche 5 bis 8, bei dem die Matte (4) in einer Schenkelablage (18) des Sitzteils (1) des Kraftfahrzeugsitzes angeordnet ist.

10. Kraftfahrzeugsitz nach Anspruch 9, bei dem ein Sitzteil (1) des Kraftfahrzeugsitzes die Schenkelablage (18) und ein Basisteil (19) aufweist, und bei dem eine Antenne (5) in dem Basisteil (19) und die Antenne (40) in der Schenkelablage (18) elektrisch miteinander verbunden sind und die für eine eletromagnetische Kopplung wirksame Antennenfläche bilden.

11. Kraftfahrzeugsitz nach Anspruch 10, bei dem die Antenne (40) der Matte (4) und die Antenne (5) des Basisteils (19) über eine Kontaktvorrichtung (42) miteinander verbunden sind.

## Claims

1. Mat for installation in or on a motor vehicle seat, containing a heatable wire (41) for a motor vehicle seat heating system, **characterised in that** the mat (4) additionally has at least one aerial (40) for sending or receiving electromagnetic signals..

2. Mat in accordance with Claim 1, **characterised in that** the aerial is provided in order to interact with a resonator or transponder in a child seat for a motor vehicle.

3. Mat in accordance with Claim 1 or 2, **characterised in that** a contact facility (42) is provided on the mat (4) for indirect or direct connection of the aerial (40) to an electrical control unit.

4. Mat in accordance with one of Claims 1 to 3, **characterised in that** the mat (4) is manufactured from a textile material.

5. Motor vehicle seat with a mat in accordance with one of the preceding claims.

6. Motor vehicle seat in accordance with Claim 5, in which the mat (4) is located in a seat section (1) of the motor vehicle seat.

7. Motor vehicle seat in accordance with Claim 5 or 6, in which the mat (4) is located between a cushion (12,22) and a cushion cover (11,21) of the motor vehicle seat.

8. Motor vehicle seat in accordance with Claim 5 or 6, in which the mat (4) is located between a cushion support (13,23) and a cushion (12,22) of the motor vehicle seat.

9. Motor vehicle seat in accordance with one of Claims 5 to 8, in which the mat (4) is located in a leg support (18) of the seat section (1) of the motor vehicle seat.

10. Motor vehicle seat in accordance with Claim 9, in which a seat section (1) of the motor vehicle seat has the leg support (18) and a base section (19), and in which an aerial (5) in the base section (19) and the aerial (40) in the leg support (18) are connected to one another electrically, forming an effective aerial area for electromagnetic interfacing.

11. Motor vehicle seat in accordance with Claim 10, in which the aerial (40) of the mat (4) and the aerial (5) of the base section (19) are connected to one another by way of a contact facility (42).

## Revendications

1. Garniture à monter dans ou sur le siège d'un véhicule automobile, comprenant un fil pouvant être chauffé (41) pour un chauffage de siège de véhicule automobile, **caractérisée en ce que** la garniture (4) comprend en outre au moins une antenne (40) servant à émettre ou recevoir des signaux électromagnétiques.

2. Garniture suivant la revendication 1, **caractérisée en ce que** l'antenne est destinée à coopérer avec un résonateur ou transpondeur d'un siège d'enfant prévu pour le véhicule automobile.

3. Garniture suivant la revendication 1 ou la revendication 2, **caractérisée en ce que**, sur la garniture (4), un dispositif de contact (42) est prévu pour la connexion directe ou indirecte de l'antenne (40) à un appareil de commande électrique.

4. Garniture suivant l'une des revendications 1 à 3, **caractérisée en ce que** la garniture (4) est réalisée en une matière textile.

5. Siège de véhicule automobile comportant une garniture suivant l'une des revendications précédentes.

6. Siège de véhicule automobile suivant la revendication 5, dans lequel la garniture (4) est disposée dans une assise (1) du siège de véhicule automobile.

7. Siège de véhicule automobile suivant la revendication 5 ou la revendication 6, dans lequel la garniture (4) est disposée entre un rembourrage (12, 22) et un revêtement de rembourrage (11, 21) du siège de véhicule automobile.

8. Siège de véhicule automobile suivant la revendication 5 ou la revendication 6, dans lequel la garniture (4) est disposée entre un support de rembourrage (13, 23) et un rembourrage (12, 22) du siège de véhicule automobile.

9. Siège de véhicule automobile suivant l'une des revendications 5 à 8, dans lequel la garniture (4) est disposée dans un repose-cuisses (18) de l'assise (1) du siège de véhicule automobile.

10. Siège de véhicule automobile suivant la revendication 9, dans lequel une assise (1) du siège de véhicule automobile comprend le repose-cuisses (18) et une partie de base (19) et dans lequel une antenne (5) située dans la partie de base (19) et l'antenne (40) située dans le repose-cuisses (18) sont reliées entre elles électriquement et constituent la surface d'antenne efficace pour un couplage électromagnétique.

11. Siège de véhicule automobile suivant la revendication 10, dans lequel l'antenne (40) de la garniture (4) et l'antenne (5) de la partie de base (19) sont reliées entre elles au moyen d'un dispositif de contact (42).
